Europäisches Patentamt

(19) European Patent Office

Office européen des brevets

(11) Publication number: **0 358 440**
**A2**

(12) **EUROPEAN PATENT APPLICATION**

(21) Application number: **89308960.7**

(22) Date of filing: **05.09.89**

(51) Int. Cl.⁵: **C 04 B 40/00**

(30) Priority: **05.09.88 NZ 226046**

(43) Date of publication of application:
**14.03.90 Bulletin 90/11**

(84) Designated Contracting States:
**AT BE CH DE ES FR GB GR IT LI LU NL SE**

(71) Applicant: **DURACRETE INDUSTRIES LIMITED**
**123 Williams Street**
**Kaiapoi (NZ)**

(72) Inventor: **Johnson, Paul Francis**
**37 Kathleen Crescent**
**Christchurch (NZ)**

**Owers, David John**
**20 Mona Vale Avenue**
**Christchurch (NZ)**

**Linton, Joseph Noel**
**RD6, West Melton**
**Canterbury (NZ)**

**Morgan, Hugh**
**123 Williams Street**
**Kaiapoi (NZ)**

(74) Representative: **Davies, Jonathan Mark et al**
**Reddie & Grose 16 Theobalds Road**
**London WC1X 8PL (GB)**

(54) **An imitation slate.**

(57) A method of producing a high density cementitious material, the method including the steps of:
forming a settable mix from water, aggregate, sand, plasticizer, pigment, polymer and portland cement mixed in a high shear mixer to produce a completely homogeneous slurry;
mixing into the slurry a defoamer;
pouring and/or injecting the settable mix into a mould;
vibrating the mix and/or the mould at a high frequency; and
allowing the settable mix to cure thereby forming a building or paving material. The invention further provided an apparatus for producing the high density cementitious material. The method and apparatus can include means for applying controllable heat to the mix to improve curing of the mix. Additionally there is provided a high density cementitious material produced in accordance with either the method or apparatus.

FIG. 3

EP 0 358 440 A2

## Description

## AN IMITATION SLATE

The invention relates to a method and apparatus for manufacturing a high density cementitious material usable as an alternative building or paving material.

At present a number of attempts have been made to produce from cementitious materials a product usable as artificial stone either as a cladding material or paving material.

A problem with the existing products is that although they may produce hard wearing products they do not have an aesthetic appearance and texture similar to that of natural stone building or paving materials.

An object of the invention is therefore to provide a method and apparatus for producing a high density cementitious material usable as a substitute for existing building or paving materials.

Further objects and advantages of the invention will become apparent from the following description which is given by way of example only.

According to a first aspect of the present invention there is provided a method of producing a high density cementitious material, the method including the steps of:

forming a settable mix from water, aggregate, sand, plasticizer, pigment, polymer and portland cement mixed in a high shear mixer to produce a completely homogeneous slurry;

mixing into the slurry a defoamer;

pouring and/or injecting the settable mix into a mould;

vibrating the mix and/or the mould at a high frequency;

and

allowing the settable mix to cure thereby forming a building or paving material.

According to a second aspect of the present invention there is provided an apparatus for producing a high density cementitious material, the apparatus including

means for forming a settable mix from water, aggregate, sand, plasticizer, pigment, polymer and portland cement; mixing the settable mix in a high mixer to produce a homogeneous slurry;

means for adding to the slurry a defoamer; apparatus for feeding the settable mix into a mould;

means for vibrating the mixture or mould at a high frequency;

means for storing the settable mix while it cures to form a building or paving material.

The means for storing the settable mix can include means for applying controllable heat to the mix to improve curing of the mix.

According to a third aspect of the present invention there is provided a high density cementitious material produced in accordance with either the method or apparatus according to the present invention.

Further aspects of the present invention which should be considered in all its novel aspects will become apparent from the following description which is given by way of example only.

An example of the invention will now be described with reference to the accompanying drawings in which:

Figure 1: is a perspective view from the side of a high shear mixer usable in the method according to the invention;

Figure 2: is a perspective view of an apparatus for feeding a settable mix into a mould; and

Figure 3: is a perspective view from one end of a vibrating table usable in accordance with the method of the invention.

An example of the method according to the invention will now be described with reference to the accompanying drawings and the production of high density material with a slate-like appearance from a cementitious mixture. It is to be appreciated that the present invention can be adapted to form paving or other building materials with differing textures consistent with the contours and surface textures of other natural stones.

The applicants through experimentation have developed a formula mixture which when used in the method and apparatus described herein produces in a mould a product having a slate like appearance with a high density appearance consistent with natural slate.

The formulae for a typical batch includes the following ingredients which are given of two examples of batch:

## EXAMPLE 1

| Material | Amount by Weight | as a %age |
|---|---|---|
| Aggregate-Pavroc washed AP5CR100 less 1mm | 1300.0Kg | 46.3 |
| Aggregate-Washed black sand less 1mm | 450.0 | 16.08 |
| Elkem microsilica, | 5.0 | 0.17 |
| Elkem super plasticizer | 0.5 | 0.01 |
| Pigment-Black Oxide,Bayer 318 | 44.0 | 1.56 |
| Polymer-MC76,RHOM & HAAS, 48% | 35.0 | 1.24 |
| Super Plastisizer-Mighty 150,Kao Chemicals | 26.0 | .92 |
| Defoam agent, Foamaster NXZ, Chemby Chemicals | 2.6 | .09 |
| Accelerator-Daraset, Grace NZ | 8.7 | .30 |
| Cement, Milburn rapid hardening | 656.0 | 23.36 |
| Water | 280.0 | 9.97 |

## EXAMPLE 2

| Material | Amount by Weight | as a %age | per 100/tiles |
|---|---|---|---|
| Aggregate-crushed Graywacke washed S.E.5. 5mm | 1300.0kg | 46.3 | 100 kg |
| Aggregate-Blended sand 73% river sand 27% crushed sand less 1mm | 450.0 | 16.08 | 60 kg |
| Elkem microsilica, | 5.0 | 0.17 | 8 kg |
| Pigment-black Oxide,Bayer 318 | 44.0 | 1.56 | 7 kg |
| Polymer-MC76, RHOM & HAAS, 48% | 35.0 | 1.24 | 5 litres |
| Super Plastisizer-Mighty 150, Kao Chemicals | 26.0 | .92 | 2 litres |
| Defoam agent, Foamaster NXZ, Chemby Chemicals | 2.6 | .09 | 15.0 ml |
| Cement, Portland | 656.0 | 23.36 | 66 kg |
| Water | 280.0 | 9.97 | 10 litres |

The above mixtures utilize the ingredients listed which are indicated by their common trade names as used in New Zealand. It is to be appreciated that other chemical manufacturers supply similar formulations which are available on the market and these can be substituted therefor.

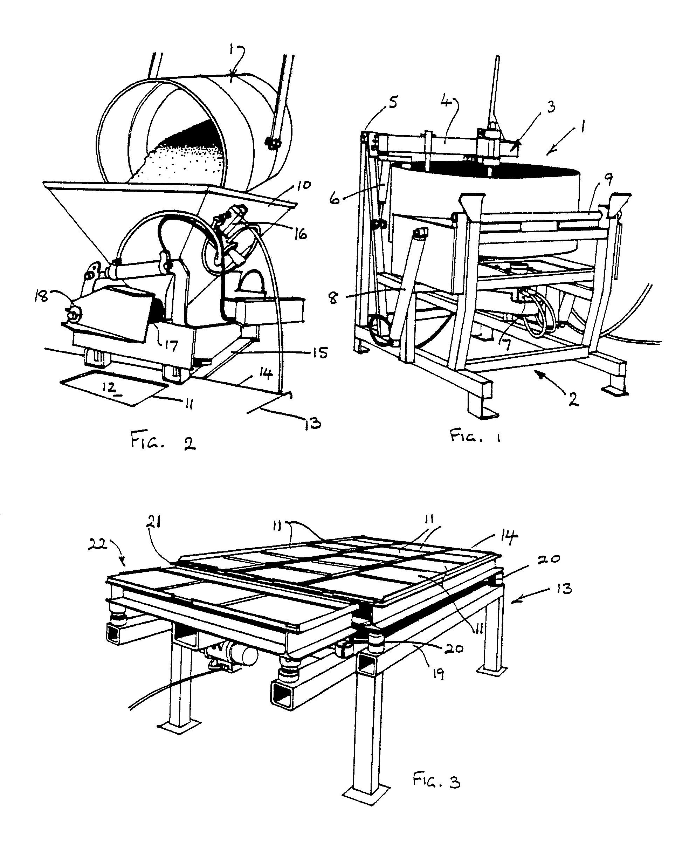

The method according to the present invention requires the chemicals to be mixed in a high shear mixer an example of which is shown in Figure 1, after the ingredients are first blended. The blended chemicals, the black oxide and aggregate, are then added the ingredients are mixed and during this stage Portland cement is added to the mixer 1 (Figure 1). The sand is also introduced followed by the correct amount of water. This water level varies according to the dampness of the aggregate. The aggregate moisture can be determined by weighing and drying a sample of the aggregate after thorough mixing of the batch. It is essential not to exceed the water proportion, by weight, in the above formula or a sloppy difficult to handle mix.

The homogenous slurry is then mixed in the pan type mixer 1 for approximately a further ten minutes.

The mixer 1 is mounted on a frame 2 which can be portable or movable as required. The mixer 1 has a paddle mixing device 3 which in Figure 1 is shown in its down or mixing position. The device 3 is mounted on a pivotable arm 4 pivotally mounted at 5 to one end of the frame 2. The arm 4 may be raised by hydraulic ram 6 to assist in loading or emptying of material from the mixer 1. The mixer 1 is advantageously driven by a hydraulic motor 7 mounted beneath the mixer 1 and controllable so that the speed of rotation of the mixer 1 can be modified if desired by processing requirements.

The mixer 1 is mounted so that it can be pivoted by hydraulic ram 8 about the transverse bar 9 to empty the mixed material to the next processing stage.

The material from mixer 1 can for example be untouched unto a hopper 10 (Figure 2) which is kept vibrating to maintain the quality and consistency of the mix.

The mix produced is then injected into a shallow mould 11 the bottom 12 of which has a surface texture corresponding to that of the slate or the like material to be produced. The textured surface 12 of the mould can be produced by taking a casting or castings of a piece of natural slate. The shallow mould or the mix is vibrated using, preferably, high frequency vibration (advantageously about 70hz). This vibration step is necessary in order to distribute the mix and to eliminate all entrapped air.

In the example the shallow mould 11 is supported on a vibrating table 13 shown in Figures 2 and 3. As is shown in Figure 2 an end 14 of the table 13 has mounted in associated therewith a frame 15 which supports the hopper 10. The hopper 10 is maintained vibrating or oscillating by vibrating means 16 on the side thereof. The hopper 10 has at its lower end a chute 17 with a hydraulically operated opening mechanism 18 passed which a predetermined volume of mix, for example 2kg, for each tile is forced into the mould 11.

The table 13 is mounted on a base 19 via rubber bearings 20. The table 13 has therein up to 15 moulds 11 which move sequentially from end 14 to end 21. The table 13 is divided into two sections which are vibrated at different rates. The second or output table 22 being a finishing stage before the tiles are passed to a curing room. The vibration of the initial table 13 is at a low frequency i.e. up to 50 hz and the tiles are on this table for about 3 to 5 minutes. The tiles are on the output table 2 for 30 seconds and this is vibrated at a higher frequency, for example 65-70 hz.

The mix is allowed to cure in a curing chamber and the curing time is selected according to the ambient temperature and, for example, can be as follows:

|  | Temperature | Time |
|---|---|---|
| Firstly | 40 °C | 4 hours |
| Then | 22 °C | 14 hours |

The humidity must be within about 90%.
After initial curing the slates are de-moulded and crated for 28 days.

The formula may include as required by end users colouring pigments to thereby produce a cementitious product of a variety of colours and tonings.

Thus by this invention there is provided a method and apparatus for producing a high density cementitious material usable as a substitute for existing building or paving materials.

A particular example of the invention has been described herein by way of example and it is envisaged that improvements and modifications may take place without departing from the scope of the attached claims.

## Claims

1. A method of producing a high density cementitious material, the method including the steps of:
forming a settable mix from water, aggregate, sand, plasticizer, pigment, polymer and portland cement mixed in a high shear mixer to produce a completely homogeneous slurry;
mixing into the slurry a defoamer;
pouring and/or injecting the settable mix into a mould;
vibrating the mix and/or the mould at a high frequency;
and
allowing the settable mix to cure thereby forming a building or paving material.

2. A method as claimed in claim 1 wherein heat is applied to improve the curing time of the settable mix.

3. A method as claimed in claim 1 or claim 2 wherein the settable mix is initially formed by blending the plasticizer and polymer in the high shear mixer.

4. A method as claimed in claim 3 wherein black oxide pigment is added and the aggregate and cement is introduced over a short period to the mixer.

5. A method as claimed in claim 3 wherein the mix is mixed for a period of 5 minutes in the mixer.

6. A method as claimed in claim 4 or claim 5 wherein sand is added after the cement and prior to the introduction of water to form the homogeneous slurry.

7. A method as claimed in claim 4 wherein the slurry is mixed in a pan-type mixer for about an additional 10 minutes.

8. A method as claimed in any one of claims 1 to 6 wherein the mould is a shallow mould which is vibrated or the mix is vibrated at a high frequency.

9. A method as claimed in claim 8 wherein the vibration is in two stages being initially at a frequency of between about 50 hz and then at a frequency of about 65 to 70 hz.

10. A method as claimed in claim 9 wherein the initial vibration is for a period of between 3 and 5 minutes and then for a period of about 30 seconds at the higher frequency.

11. A method as claimed in any one of the preceding claims wherein curing of the product is in two steps initially at about 40°C for about 4 hours and then at about 22°C for about 14 hours.

12. A method of producing a high density cementitious material substantially as hereinbefore described.

13. An apparatus for producing a high density cementitious material, the apparatus including means for forming a settable mix from water, aggregate, sand, plasticizer, pigment, polymer and portland cement; mixing the settable mix in a high mixer to produce a homogeneous slurry; means for adding to the slurry a defoamer; apparatus for feeding the settable mix into a mould; means for vibrating the mixture or mould at a high frequency; means for storing the settable mix while it cures to form a building or paving material.

14. An apparatus as claimed in claim 11 wherein the means for storing the settable mix includes means for applying controllable heat to the mix to improve curing of the mix.

15. An apparatus for producing a high density cementitious material substantially as hereinbefore descirbed with reference to the accompanying drawings.

16. A high density cementitious material produced in accordance with either the method of claims 1 to 10 or the apparatus according to claims 11 to 14.

FIG. 2

FIG. 1

FIG. 3